# EUROPEAN PATENT APPLICATION

(11) **EP 4 810 533 A1**
(43) Date of publication of application: **23.09.2026**
(21) Application number: 24906819.8
(22) Date of filing: 21.08.2024
(51) Int. Cl.: C08G 18/00, C08G 18/10, C08G 18/28, C08G 18/42, C08G 18/76, C08K 5/205, C08L 75/04, C08G 101/00

(54) **POLYURETHANE FOAM-FORMING COMPOSITION, POLYURETHANE FOAM ADDITIVE, AND POLYURETHANE FOAM**

(30) Priority: 21.12.2023 JP 2023215942
(71) Applicant: Tosoh Corporation, Shunan-shi, Yamaguchi 746-8501 (JP)
(72) Inventor: NAKASHIMA, Yuhei, Ayase-shi, Kanagawa 252-1123 (JP)
(74) Representative: Novagraaf International SA
(86) International application number: PCT/JP2024/029679
(87) International publication number: WO 2025/134429

(57) **Abstract**

A polyurethane foam-forming composition including: a polyol, a polyisocyanate, and at least one aromatic compound selected from the group consisting of a compound represented by the following formula (1) and a compound represented by the following formula (2). 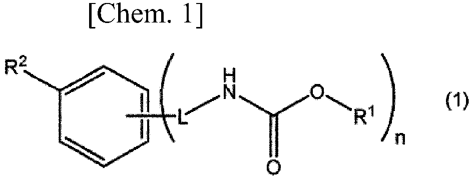 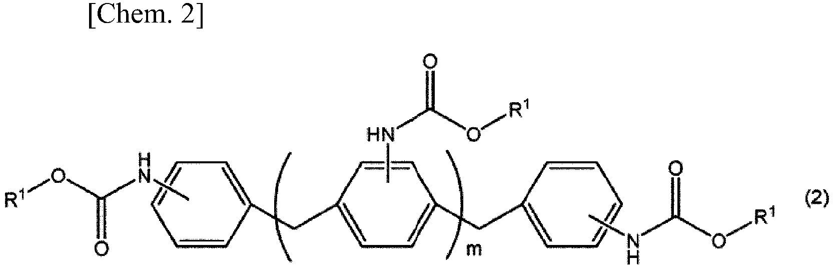 [In the formulae, R¹ represents an aliphatic hydrocarbon group having 1 to 3 carbon atoms, R² represents a hydrogen atom or a methyl group, L represents a single bond or a methylene group, n represents 1 or 2, and m represents 0 or an integer of 1 or more.]

## Description

### Technical Field

The present disclosure relates to an additive for polyurethane foam, a polyurethane foam-forming composition, and a polyurethane foam.

### Background Art

Polyurethane foam has been widely used for heat insulating material applications such as refrigerators, refrigerated warehouses, and building materials, and for spray applications, and the like, because polyurethane foam is excellent in heat insulating performance, dimensional stability, workability, and the like. On the other hand, polyurethane foam has a problem in that thermal conductivity increases over time (that is, heat insulating performance decreases over time).

In response to this, for example, Patent Literature 1 discloses a technique for suppressing the time-dependent deterioration of thermal conductivity of polyurethane foam, particularly the time-dependent deterioration of thermal conductivity in the initial stage where the change is large, by after-aging the molded polyurethane foam in a vapor of an amine or an alcohol.

### Citation List

### Patent Literature

[Patent Literature 1] Japanese Unexamined Patent Publication No. 2002-302528

### Summary of Invention

### Technical Problem

However, the technique of the above-described Patent Literature 1 involves complication of work processes and an accompanying increase in manufacturing costs. For this reason, a technology for obtaining a polyurethane foam capable of maintaining a low thermal conductivity over a long period of time without including complicated processes in the manufacturing process is desired.

Accordingly, one aspect of the present disclosure is directed to providing a polyurethane foam-forming composition for forming a polyurethane foam in which a time-dependent increase in thermal conductivity is suppressed. Another aspect of the present disclosure is directed to providing an additive for polyurethane foam capable of suppressing a time-dependent increase in thermal conductivity of polyurethane foam. Another aspect of the present disclosure is directed to providing a polyurethane foam in which a time-dependent increase in thermal conductivity is suppressed.

### Solution to Problem

Some aspects of the present disclosure provide the following [1] to [8].
[1] A polyurethane foam-forming composition including: a polyol, a polyisocyanate, and at least one aromatic compound selected from the group consisting of a compound represented by the following formula (1) and a compound represented by the following formula (2). 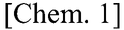 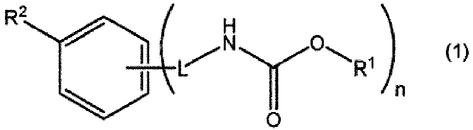 [In formula (1), R¹ represents an aliphatic hydrocarbon group having 1 to 3 carbon atoms, R² represents a hydrogen atom or a methyl group, L represents a single bond or a methylene group, and n represents 1 or 2. When a plurality of R¹ are present, they may be the same as or different from each other, and when a plurality of L are present, they may be the same as or different from each other.] 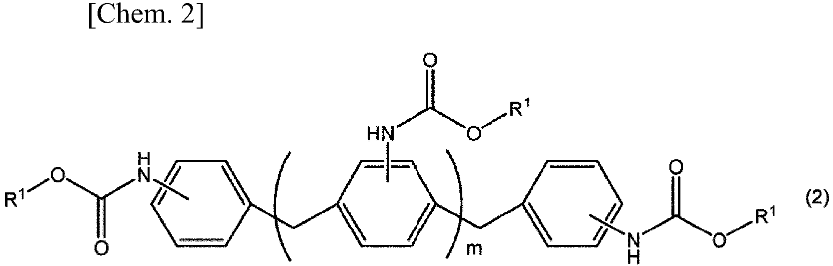 [In formula (2), R¹ has the same meaning as R¹ in the above-described formula (1), and m represents 0 or an integer of 1 or more. A plurality of R¹ may be the same as or different from each other.]
[2] The polyurethane foam-forming composition according to [1], including a reaction product of: at least one isocyanate selected from the group consisting of phenyl isocyanate, tolylene diisocyanate, diphenylmethane diisocyanate, and polymethylene polyphenyl polyisocyanate; and an aliphatic monoalcohol having 1 to 3 carbon atoms.
[3] The polyurethane foam-forming composition according to [1] or [2], in which the polyol includes an aromatic polyester polyol.
[4] The polyurethane foam-forming composition according to any one of [1] to [3], further including at least one selected from the group consisting of a catalyst, a foam stabilizer, and a blowing agent.
[5] An additive for polyurethane foam, including at least one aromatic compound selected from the group consisting of a compound represented by the following formula (1) and a compound represented by the following formula (2). 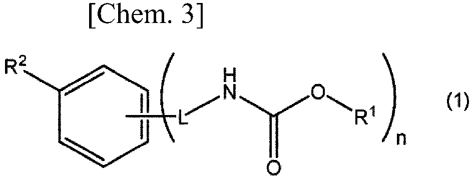 [In formula (1), R¹ represents an aliphatic hydrocarbon group having 1 to 3 carbon atoms, R² represents a hydrogen atom or a methyl group, L represents a single bond or a methylene group, and n represents 1 or 2. When a plurality of R¹ are present, they may be the same as or different from each other, and when a plurality of L are present, they may be the same as or different from each other.] 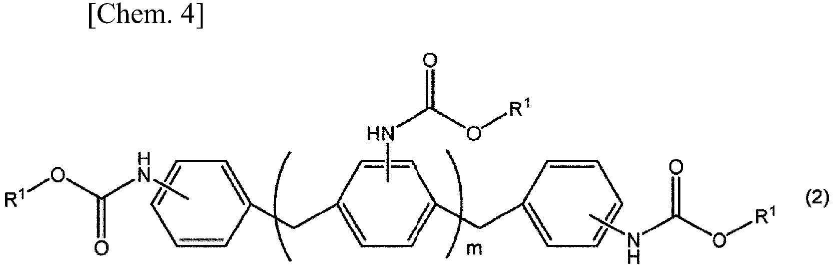 [In formula (2), R¹ has the same meaning as R¹ in the above-described formula (1), and m represents 0 or an integer of 1 or more. A plurality of R¹ may be the same as or different from each other.]
[6] The additive for polyurethane foam according to [5], including a reaction product of: at least one isocyanate selected from the group consisting of phenyl isocyanate, tolylene diisocyanate, diphenylmethane diisocyanate, and polymethylene polyphenyl polyisocyanate; and an aliphatic monoalcohol having 1 to 3 carbon atoms.
[7] The additive for polyurethane foam according to [5] or [6], which is a thermal conductivity modifier.
[8] A polyurethane foam formed from the polyurethane foam-forming composition according to any one of [1] to [4].

### Advantageous Effects of Invention

According to one aspect of the present disclosure, it is possible to provide a polyurethane foam-forming composition for forming a polyurethane foam in which a time-dependent increase in thermal conductivity is suppressed. According to another aspect of the present disclosure, it is also possible to provide an additive for polyurethane foam capable of suppressing a time-dependent increase in thermal conductivity of polyurethane foam. According to another aspect of the present disclosure, it is also possible to provide a polyurethane foam in which a time-dependent increase in thermal conductivity is suppressed.

### Description of Embodiments

In the present specification, a numerical range indicated by using "to" refers to a range that includes the numerical values described before and after "to" as the minimum and maximum values, respectively. Furthermore, unless otherwise specified, the units of the numerical values described before and after "to" are the same. In the numerical ranges described in a stepwise manner in the present specification, the upper limit value or the lower limit value of a numerical range at one step may be replaced with the upper limit value or the lower limit value of a numerical range at another step. Furthermore, in the numerical ranges described in the present specification, the upper limit value or the lower limit value of the numerical range may be replaced with the values shown in the Examples. Furthermore, the individually described upper and lower limit values can be arbitrarily combined.

Hereinafter, preferred embodiments of the present disclosure will be described. However, the present disclosure is not limited to the following embodiments in any way.

### <Additive for Polyurethane Foam>

One embodiment of the present disclosure is an additive for polyurethane foam (hereinafter, also referred to as "Additive A") including at least one aromatic compound selected from the group consisting of Aromatic Compound A and Aromatic Compound B.

### (Aromatic Compound A)

Aromatic Compound A is a compound represented by the following formula (1).

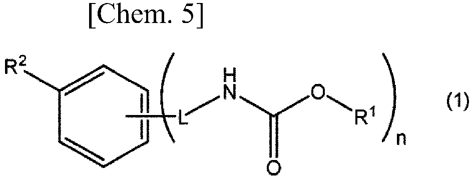

R¹ in formula (1) represents an aliphatic hydrocarbon group having 1 to 3 carbon atoms. The number of carbon atoms of the aliphatic hydrocarbon group is preferably 1 to 2, and more preferably 1.

The aliphatic hydrocarbon group may be linear or branched. The aliphatic hydrocarbon group may be either saturated or unsaturated.

The aliphatic hydrocarbon group is preferably an alkyl group, and more preferably a linear alkyl group. Specific examples of the alkyl group include a methyl group, an ethyl group, a propyl group, and an isopropyl group.

When a plurality of R¹ are present in formula (1), they may be the same as or different from each other.

R² in formula (1) represents a hydrogen atom or a methyl group. R² is preferably a hydrogen atom. When R² in formula (1) is a methyl group, the group in parentheses in formula (1) (-NHCOOR¹) may be located at any of the ortho position, meta position, and para position relative to R².

L in formula (1) represents a single bond or a methylene group. When a plurality of L are present in formula (1), they may be the same as or different from each other.

n in formula (1) represents 1 or 2. n is preferably 1. When n is 2, the groups in parentheses in formula (1) (-NHCOOR¹) may be at the ortho position, meta position, or para position relative to each other.

As Aromatic Compound A, one kind of compound may be used alone, or two or more kinds of compounds may be used in combination.

### (Aromatic Compound B)

Aromatic Compound B is a compound represented by the following formula (2).

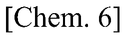

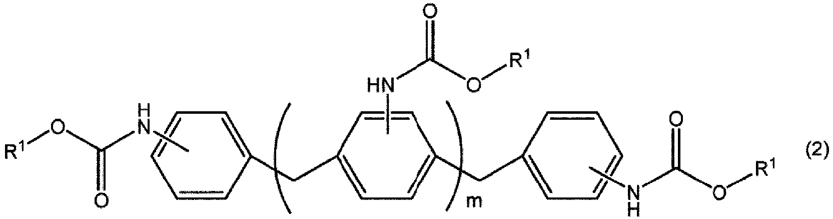

R¹ in formula (2) has the same meaning as R¹ in the above-described formula (1), and preferred examples thereof are also the same. A plurality of R¹ in formula (2) may be the same as or different from each other.

m in formula (2) represents 0 or an integer of 1 or more. The upper limit value of m may be, for example, 8.

Aromatic Compound B may be used alone as one kind, or two or more kinds may be used in combination. For example, as Aromatic Compound B, a mixture of a compound in which m in formula (2) is 0 (binuclear compound) and a compound in which m in formula (2) is 1 or more (polynuclear compound) may be used. The content of the binuclear compound in the mixture may be 20 to 100% by mass, 30 to 80% by mass, or 40 to 70% by mass based on the total mass of the mixture.

Additive A may contain only one of Aromatic Compound A and Aromatic Compound B, or may contain both Aromatic Compound A and Aromatic Compound B. Aromatic Compound A and Aromatic Compound B may be solid or liquid at room temperature (23 °C). When Aromatic Compound A and Aromatic Compound B are solid at room temperature, they preferably have solubility in a polyol and/or a polyisocyanate, and particularly more preferably have solubility in an aromatic polyester polyol.

The content of Aromatic Compound A may be 80% by mass or more (for example, 80 to 100% by mass), 90% by mass or more, or 95% by mass or more based on the total mass of Additive A, from the viewpoint of enhancing the effect of Additive A.

The content of Aromatic Compound B may be 80% by mass or more (for example, 80 to 100% by mass), 90% by mass or more, or 95% by mass or more based on the total mass of Additive A, from the viewpoint of enhancing the effect of Additive A.

The total content of Aromatic Compound A and Aromatic Compound B may be 80% by mass or more (for example, 80 to 100% by mass), 90% by mass or more, or 95% by mass or more based on the total mass of Additive A, from the viewpoint of enhancing the effect of Additive A. When Additive A contains Aromatic Compound A and Aromatic Compound B, the content of Aromatic Compound A may be 10 to 90% by mass, 20 to 80% by mass or more, or 30 to 70% by mass based on the total content of Aromatic Compound A and Aromatic Compound B.

Additive A may be composed of only Aromatic Compound A and/or Aromatic Compound B, or may contain components other than Aromatic Compound A and Aromatic Compound B (for example, components that may be inevitably mixed in during the production process of the above-described aromatic compounds).

In one embodiment, Additive A preferably contains a reaction product (hereinafter, referred to as "Reaction Product A") of at least one isocyanate selected from the group consisting of phenyl isocyanate, tolylene diisocyanate, diphenylmethane diisocyanate (hereinafter, referred to as "MDI"), and polymethylene polyphenyl polyisocyanate, and an aliphatic monoalcohol having 1 to 3 carbon atoms. Here, the aliphatic monoalcohol having 1 to 3 carbon atoms is a compound represented by R¹OH. R¹ of the aliphatic monoalcohol has the same meaning as R¹ in the above-described formula (1), and preferred examples thereof are also the same. Furthermore, polymethylene polyphenyl polyisocyanate is a compound represented by the following formula (3).

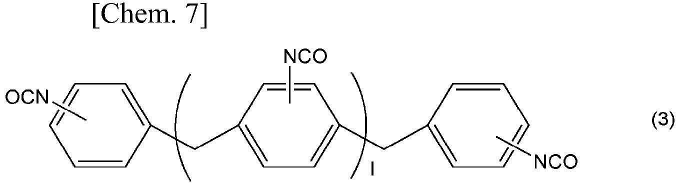

In formula (3), l represents an integer of 1 or more. The upper limit value of l may be, for example, 8.

MDI includes three isomers of 4,4'-diphenylmethane diisocyanate (hereinafter, referred to as "4,4'-MDI"), 2,4'-diphenylmethane diisocyanate (hereinafter, referred to as "2,4'-MDI"), and 2,2'-diphenylmethane diisocyanate (hereinafter, referred to as "2,2'-MDI"). As MDI, one of these may be used alone, or two or more kinds may be used in combination.

The content of 4,4'-MDI in MDI may be, for example, 40 to 100% by mass, 60 to 100% by mass, or 80 to 100% by mass based on the total amount of MDI. The content of 2,4'-MDI in MDI may be, for example, 0 to 60% by mass based on the total amount of MDI. The content of 2,2'-MDI in MDI may be, for example, 0 to 5% by mass based on the total amount of MDI.

Reaction Product A contains at least one of Aromatic Compound A and Aromatic Compound B. Reaction Product A may contain compounds other than Aromatic Compound A and Aromatic Compound B (for example, a compound in which some of the isocyanate groups (-NCO) in formula (3) remain unreacted), but the total content of Aromatic Compound A and Aromatic Compound B in Reaction Product A is preferably 80% by mass or more, more preferably 90% by mass or more, and still more preferably 95% by mass or more.

Reaction Product A may be a reaction product of two or more kinds of isocyanates and an aliphatic monoalcohol having 1 to 3 carbon atoms. For example, Reaction Product A may be a reaction product of polymeric MDI, which is a mixture of diphenylmethane diisocyanate and polymethylene polyphenyl polyisocyanate, and an aliphatic monoalcohol having 1 to 3 carbon atoms.

The MDI content in polymeric MDI may be 20 to 99% by mass, 30 to 80% by mass, or 40 to 70% by mass based on the total mass of polymeric MDI.

The isocyanate group content of polymeric MDI may be 27 to 33% by mass, 28 to 32% by mass, or 29 to 32% by mass based on the total mass of polymeric MDI.

The content of Reaction Product A may be 85% by mass or more (for example, 85 to 100% by mass), 90% by mass or more, or 95% by mass or more based on the total mass of Additive A, from the viewpoint of enhancing the effect of Additive A.

Additive A described above has a function of suppressing the time-dependent decrease in heat insulating performance of polyurethane foam (particularly rigid polyurethane foam). Therefore, Additive A can also be referred to as a thermal conductivity modifier for polyurethane foam (or an agent for suppressing the time-dependent increase in thermal conductivity of polyurethane foam). However, since Additive A may have effects other than the effect of suppressing the time-dependent increase in thermal conductivity of polyurethane foam, Additive A does not necessarily have to be used for the purpose of modifying thermal conductivity (suppressing the time-dependent increase in thermal conductivity).

### <Polyurethane Foam-Forming Composition>

Another embodiment of the present disclosure is a polyurethane foam-forming composition (hereinafter, also referred to as "Composition A") including a polyol, a polyisocyanate, and at least one aromatic compound selected from the group consisting of Aromatic Compound A and Aromatic Compound B. Here, "polyurethane foam-forming" means having the property of being capable of forming a polyurethane foam from the composition alone.

### (Polyol)

A polyol is a compound having two or more hydroxyl groups. Examples of the polyol include a polyester polyol, a polyether polyol, a polycaprolactone polyol, a polycarbonate polyol, and the like. The polyol may be used alone as one kind, or a plurality of kinds may be used in combination.

As the polyol, an aromatic polyester polyol is preferably used from the viewpoint of easily obtaining higher heat insulating performance (initial and long-term heat insulating properties). Here, an aromatic polyester polyol is a polyester polyol having an aromatic ring in the molecule. The aromatic polyester polyol may be, for example, a polyester polyol obtained by a condensation polymerization reaction of an acid component containing at least one selected from the group consisting of phthalic acid, isophthalic acid, and terephthalic acid, and anhydrides thereof, and a polyfunctional alcohol.

The polyfunctional alcohol is preferably a low-molecular-weight polyol having a molecular weight of 500 or less. Examples of the polyfunctional alcohol include ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer diol, ethylene oxide or propylene oxide adducts of bisphenol A, bis(β-hydroxyethyl)benzene, xylylene glycol, glycerin, trimethylolpropane, pentaerythritol, and the like.

As the aromatic polyester polyol, a condensation polymerization product of an acid component containing at least one of phthalic acid, isophthalic acid, or terephthalic acid, or anhydrides thereof, and a polyfunctional alcohol containing at least one selected from the group consisting of ethylene glycol and diethylene glycol is preferably used from the viewpoint of easily obtaining higher heat insulating performance (initial and long-term heat insulating properties).

The number-average molecular weight of the polyol may be 300 to 1,500, 350 to 1,000, or 400 to 700 from the viewpoint of easily obtaining higher heat insulating performance (initial and long-term heat insulating properties). The number-average molecular weight of the above-described polyol is a number-average molecular weight in terms of polystyrene measured by gel permeation chromatography (GPC).

The hydroxyl value of the polyol may be 70 to 800 mgKOH/g, 100 to 650 mgKOH/g, or 150 to 450 mgKOH/g from the viewpoint of easily obtaining higher heat insulating performance (initial and long-term heat insulating properties). Note that the hydroxyl value is a value measured in accordance with JIS K1557-1.

The content of the polyol may be 10 to 50% by mass, 15 to 45% by mass, or 20 to 40% by mass based on the total mass of Composition A.

### (Polyisocyanate)

A polyisocyanate is a compound having a plurality of isocyanate groups. Examples of the polyisocyanate include diphenylmethane diisocyanate (MDI), polyphenylene polymethylene polyisocyanate, and various modified forms of MDI or polyphenylene polymethylene polyisocyanate (urethane-modified forms, urea-modified forms, allophanate-modified forms, nurate-modified forms, biuret-modified forms, and the like). The polyisocyanate may be used alone as one kind, or a plurality of kinds may be used in combination.

The content of the polyisocyanate may be 30 to 70% by mass, 35 to 65% by mass, or 40 to 60% by mass based on the total mass of Composition A.

### (Aromatic Compound)

The details of Aromatic Compound A and Aromatic Compound B are the same as those of Aromatic Compound A and Aromatic Compound B described above. When Aromatic Compound A and Aromatic Compound B are solid at room temperature, they preferably have solubility in the polyol and/or the polyisocyanate contained in Composition A.

Aromatic Compound A and Aromatic Compound B may be contained in Composition A as components of an additive for polyurethane foam (for example, a thermal conductivity modifier). In other words, Composition A may contain Additive A.

Composition A may contain only one of Aromatic Compound A and Aromatic Compound B, or may contain both Aromatic Compound A and Aromatic Compound B.

The content of Aromatic Compound A may be 0.1 to 20% by mass based on the total mass of Composition A. When the content of Aromatic Compound A is 0.1% by mass or more, there is a tendency that the time-dependent increase in thermal conductivity of polyurethane foam can be further suppressed, and when the content is 20% by mass or less, there is a tendency that the time-dependent increase in thermal conductivity of polyurethane foam can be suppressed without impairing the mechanical properties of polyurethane foam. From the same viewpoint, the content of Aromatic Compound A may be 0.5% by mass or more or 1% by mass or more, and may be 15% by mass or less or 10% by mass or less, based on the total mass of Composition A. In one embodiment, the content of Aromatic Compound A based on the total amount of the polyol, the polyisocyanate, and Aromatic Compound A may be within the above-described range (for example, 0.1 to 20% by mass).

The content of Aromatic Compound B may be 0.1 to 20% by mass based on the total mass of Composition A. When the content of Aromatic Compound B is 0.1% by mass or more, there is a tendency that the time-dependent increase in thermal conductivity of polyurethane foam can be further suppressed, and when the content is 20% by mass or less, there is a tendency that the time-dependent increase in thermal conductivity of polyurethane foam can be suppressed without impairing the mechanical properties of polyurethane foam. From the same viewpoint, the content of Aromatic Compound B may be 0.5% by mass or more or 1% by mass or more, and may be 15% by mass or less or 10% by mass or less, based on the total mass of Composition A. In one embodiment, the content of Aromatic Compound B based on the total amount of the polyol, the polyisocyanate, and Aromatic Compound B may be within the above-described range (for example, 0.1 to 20% by mass).

The total content of Aromatic Compound A and Aromatic Compound B may be 0.1 to 20% by mass based on the total mass of Composition A. When the total content of Aromatic Compound A and Aromatic Compound B is 0.1% by mass or more, there is a tendency that the time-dependent increase in thermal conductivity of polyurethane foam can be further suppressed, and when the total content is 20% by mass or less, there is a tendency that the time-dependent increase in thermal conductivity of polyurethane foam can be suppressed without impairing the mechanical properties of polyurethane foam. From the same viewpoint, the total content of Aromatic Compound A and Aromatic Compound B may be 0.5% by mass or more or 1% by mass or more, and may be 15% by mass or less or 10% by mass or less, based on the total mass of Composition A. In one embodiment, the content of Additive A may be within the above-described range (for example, 0.1 to 20% by mass), the content of Aromatic Compound A and Aromatic Compound B based on the total amount of the polyol, the polyisocyanate, Aromatic Compound A, and Aromatic Compound B may be within the above-described range (for example, 0.1 to 20% by mass), and the content of Additive A based on the total amount of the polyol, the polyisocyanate, and Additive A may be within the above-described range (for example, 0.1 to 20% by mass).

When Composition A contains Aromatic Compound A and Aromatic Compound B, the content of Aromatic Compound A may be 10 to 90% by mass, 20 to 80% by mass or more, or 30 to 70% by mass based on the total content of Aromatic Compound A and Aromatic Compound B.

### (Other Components)

Composition A may contain, as other components, known components used for polyurethane foam and the formation thereof. Specific examples of the other components include a catalyst, a flame retardant, a blowing agent, a foam stabilizer, a plasticizer, a colorant, and the like. Note that the other components are optional components and are not necessarily required.

### [Catalyst]

As the catalyst, various urethanization catalysts, isocyanurate-forming catalysts, and the like known in the art can be used. A urethanization catalyst and an isocyanurate-forming catalyst (trimerization catalyst) may be used in combination.

Examples of the urethanization catalyst include amine compounds such as triethylenediamine, N,N-dimethylcyclohexylamine, N,N,N',N'-tetramethylethylenediamine, N,N,N',N",N"-pentamethyldiethylenetriamine, N,N,N',N",N‴,N‴-hexamethyltriethylenetetramine, bis(dimethylaminoethyl)ether, 1,3,5-tris(N,N-dimethylaminopropyl)hexahydro-S-triazine, 2,4,6-tris(dimethylaminomethyl)phenol, 2,4-bis(dimethylaminomethyl)phenol, N-dimethylaminoethyl-N'-methylpiperazine, N,N,N',N'-tetramethylhexamethylenediamine, 1,2-dimethylimidazole, 1-isobutyl-2-methylimidazole, N,N-dimethylaminopropylamine, and bis(dimethylaminopropyl)amine, and alkanolamines such as N,N-dimethylaminoethanol, N,N,N'-trimethylaminoethylethanolamine, 2-(2-dimethylaminoethoxy)ethanol, N,N,N'-trimethyl-N'-hydroxyethylbisaminoethyl ether, N-(3-dimethylaminopropyl)-N,N-diisopropanolamine, N-(2-hydroxyethyl)-N'-methylpiperazine, N,N-dimethylaminohexanol, and 5-dimethylamino-3-methyl-1-pentanol. These urethanization catalysts may be used alone as one kind, or a plurality of kinds may be used in combination.

Examples of the isocyanurate-forming catalyst include quaternary ammonium salts, alkali metal salts of carboxylic acids having 2 to 12 carbon atoms, alkali metal salts of acetylacetone and salicylaldehyde, Lewis acid complex salts of amines, and metal catalysts. These isocyanurate-forming catalysts may be used alone as one kind, or a plurality of kinds may be used in combination.

The blending amount (content) of the catalyst may be 0.1 to 20 parts by mass based on 100 parts by mass of the total amount of the polyol and the polyisocyanate.

### [Foam Stabilizer]

As the foam stabilizer, foam stabilizers known in the art (for example, foam stabilizers for forming rigid polyurethane foam) can be used. The foam stabilizer is, for example, a surfactant, and may be a nonionic surfactant such as an organosilicone-based surfactant. The foam stabilizer may be used alone as one kind, or a plurality of kinds may be used in combination.

A commercially available product can also be used as the foam stabilizer. Examples of the commercially available product include L5420, L5340, L6188, L6877, L6889, L6900, L6866, L6643, L6978 manufactured by Momentive, B8040, B8155, B8239, B8244, B8330, B8443, B8450, B8460, B8462, B8465, B8466, B8467, B8481, B8484, B8485, B8486, B8496, B8870, B8871 manufactured by Evonik, SZ-1328, SZ-1642, SZ-1677, SH-193 manufactured by Dow Toray Co., Ltd., and DC-193, DC5598 manufactured by Air Products.

The blending amount of the foam stabilizer may be 0.1 to 5.0 parts by mass based on 100 parts by mass of the total amount of the polyol and the polyisocyanate.

### [Blowing Agent]

The blowing agent is, for example, water. Water generates carbon dioxide by reaction with isocyanate groups, thereby causing foaming. As the blowing agent, in addition to water, which is a chemical blowing agent, a physical blowing agent can also be used. As the physical blowing agent, conventionally known ones such as hydrocarbon compounds, HFCs, HFOs, and HCFOs can be used. These physical blowing agents may be used alone as one kind, or a plurality of kinds may be used in combination. From the viewpoint of easily lowering the global warming potential of the blowing agent itself and from the viewpoint of easily obtaining high heat insulating performance (initial and long-term heat insulating properties), it is particularly preferable to use at least one selected from the group consisting of HFOs and HCFOs in combination with water.

The blending amount of the chemical blowing agent may be 0.1 to 10 parts by mass based on 100 parts by mass of the total amount of the polyol and the polyisocyanate. The blending amount of the physical blowing agent may be 1 to 80 parts by mass based on 100 parts by mass of the total mass of the total amount of the polyol and the polyisocyanate.

### [Flame Retardant]

As the flame retardant, known flame retardants can be used. Specific examples of the flame retardant include phosphate esters such as tris(chloropropyl) phosphate, and organophosphazenes such as methoxyphenoxycyclophosphazene.

The blending amount (content) of the flame retardant may be 0 to 100 parts by mass based on 100 parts by mass of the total amount of the polyol and the polyisocyanate.

Composition A may contain the above-described Reaction Product A. The content of Reaction Product A may be 0.1 to 20% by mass based on the total mass of Composition A. When the content of Reaction Product A is 0.1% by mass or more, there is a tendency that the time-dependent increase in thermal conductivity of polyurethane foam can be further suppressed, and when the content is 20% by mass or less, there is a tendency that the time-dependent increase in thermal conductivity of polyurethane foam can be suppressed without impairing the mechanical properties of polyurethane foam. From the same viewpoint, the content of Reaction Product A may be 0.5% by mass or more or 1% by mass or more, and may be 15% by mass or less or 10% by mass or less, based on the total mass of Composition A. In one embodiment, the content of Reaction Product A based on the total amount of the polyol, the polyisocyanate, and Reaction Product A may be within the above-described range (for example, 0.1 to 20% by mass).

Composition A may be a one-part composition or a multi-part composition composed of two or more liquids. The multi-part composition may be, for example, a two-part composition that independently includes a first liquid containing a polyol (for example, a polyol composition) and a second liquid containing a polyisocyanate (for example, a polyisocyanate composition). The above-described specific aromatic compounds (Aromatic Compound A and Aromatic Compound B) may be contained in at least one of the first liquid and the second liquid, or may be contained in a liquid different from the first liquid and the second liquid. That is, the multi-part composition may include, separately from the first liquid and the second liquid, a third liquid containing the above-described specific aromatic compounds (Aromatic Compound A and Aromatic Compound B).

Among the above-described examples, when the above-described specific aromatic compounds (Aromatic Compound A and Aromatic Compound B) are contained in the polyol composition, the aromatic compounds tend to be easily dispersed uniformly in Composition A. Therefore, Composition A is preferably a one-part composition, or a multi-part composition including a first liquid containing a polyol and at least one aromatic compound selected from the group consisting of Aromatic Compound A and Aromatic Compound B, and a second liquid containing a polyisocyanate.

The isocyanate index of Composition A may be 100 to 400. Here, the isocyanate index (NCO index) means the percentage of the number of moles of all isocyanate groups (NCO groups) in the isocyanate group-containing compound to the number of moles of all active hydrogen groups in the active hydrogen group-containing compound contained in Composition A (NCO groups/active hydrogen groups × 100). The active hydrogen group-containing compound includes not only a polyol but also water. The isocyanate index (NCO index) may be 150 to 300 or 180 to 250.

According to Composition A described above, a polyurethane foam in which a time-dependent increase in thermal conductivity is suppressed can be formed. Specifically, for example, a polyurethane foam can be formed by reacting the polyol and the polyisocyanate in Composition A and foaming and curing Composition A. When Composition A is a multi-part composition, a polyurethane foam can be formed by mixing the liquids constituting Composition A (for example, the first liquid containing a polyol and the second liquid containing a polyisocyanate) and reacting (foaming and curing) them. The reaction (foaming and curing) may be performed by a conventionally known method, and may be performed, for example, by heating in a mold.

Composition A is suitably used as a material for a heat insulating material (polyurethane foam for heat insulating material). Composition A can be used for both a flexible polyurethane foam (for example, a polyurethane foam having a 10% deformation compressive stress of less than 20 kPa measured in accordance with JIS K7220) and a rigid polyurethane foam (for example, a polyurethane foam having a 10% deformation compressive stress of 20 kPa or more measured in accordance with JIS K7220), but is particularly suitably used for forming a rigid polyurethane foam.

### <Polyurethane Foam>

Another embodiment of the present disclosure is a polyurethane foam (hereinafter, referred to as "Polyurethane Foam A") formed from the above-described Composition A.

Polyurethane Foam A may be a polyurethane foam that includes a polyurethane resin, which is a reaction product of the above-described polyol and polyisocyanate, and at least one aromatic compound selected from the group consisting of Aromatic Compound A and Aromatic Compound B, and that may contain other components that may be contained in the above-described Composition A (a catalyst, a flame retardant, a blowing agent, a foam stabilizer, a plasticizer, a colorant, and the like).

The content of Aromatic Compound A may be 0.1 to 20 parts by mass per 100 parts by mass of the polyurethane resin. When the content of Aromatic Compound A is 0.1 parts by mass or more, there is a tendency that the time-dependent increase in thermal conductivity of polyurethane foam can be further suppressed, and when the content is 20 parts by mass or less, there is a tendency that the time-dependent increase in thermal conductivity of polyurethane foam can be suppressed without impairing the mechanical properties of polyurethane foam. From the same viewpoint, the content of Aromatic Compound A may be 0.5 parts by mass or more or 1 part by mass or more, and may be 15 parts by mass or less or 10 parts by mass or less, per 100 parts by mass of the polyurethane resin.

The content of Aromatic Compound B may be 0.1 to 20 parts by mass per 100 parts by mass of the polyurethane resin. When the content of Aromatic Compound B is 0.1 parts by mass or more, there is a tendency that the time-dependent increase in thermal conductivity of polyurethane foam can be further suppressed, and when the content is 20 parts by mass or less, there is a tendency that the time-dependent increase in thermal conductivity of polyurethane foam can be suppressed without impairing the mechanical properties of polyurethane foam. From the same viewpoint, the content of Aromatic Compound B may be 0.5 parts by mass or more or 1 part by mass or more, and may be 15 parts by mass or less or 10 parts by mass or less, per 100 parts by mass of the polyurethane resin.

The total content of Aromatic Compound A and Aromatic Compound B may be 0.1 to 20 parts by mass per 100 parts by mass of the polyurethane resin. When the content of Aromatic Compound A and Aromatic Compound B is 0.1 parts by mass or more, there is a tendency that the time-dependent increase in thermal conductivity of polyurethane foam can be further suppressed, and when the content is 20 parts by mass or less, there is a tendency that the time-dependent increase in thermal conductivity of polyurethane foam can be suppressed without impairing the mechanical properties of polyurethane foam. From the same viewpoint, the total content of Aromatic Compound A and Aromatic Compound B may be 0.5 parts by mass or more or 1 part by mass or more, and may be 15 parts by mass or less or 10 parts by mass or less, per 100 parts by mass of the polyurethane resin.

The polyurethane foam is suitably used as, for example, a heat insulating material for roofs of buildings, walls, underground structures, floor slabs of bridges, water tanks, tanks, and interiors of housings of refrigerators and the like.

### [Examples]

Hereinafter, the content of the present disclosure will be described in more detail using Examples and Comparative Examples, but the present disclosure is not limited to the following Examples.

Details of materials used in the present Examples are shown below.
· Polyol a: MAXIMOL RFK-505 (manufactured by Air Water Performance Chemical Inc., phthalic acid-based polyester polyol, hydroxyl value 250 mgKOH/g)
· Polyol b: MAXIMOL RFK-556 (manufactured by Air Water Performance Chemical Inc., phthalic acid-based polyester polyol, hydroxyl value 250 mgKOH/g)
· Additive A-1: Ethyl carbanilate (manufactured by Tokyo Chemical Industry Co., Ltd., solid at 23 °C, purity 99%)
· Additive A-2: Methyl carbanilate (manufactured by Tokyo Chemical Industry Co., Ltd., solid at 23 °C, purity 98%)
· Additive A-3: Aromatic compound synthesized in Synthesis Example 1 below (solid at 23 °C)
· Additive A-4: Aromatic compound synthesized in Synthesis Example 2 below (solid at 23 °C)
· Additive A-5: Aromatic compound synthesized in Synthesis Example 3 below (solid at 23 °C)
· Additive A-6: Aromatic compound synthesized in Synthesis Example 4 below (solid at 23 °C)
· Additive B-1: Ethyl N-methylcarbamate (manufactured by Tokyo Chemical Industry Co., Ltd., liquid at 23 °C, purity 98%)
· Additive B-2: Aromatic compound synthesized in Synthesis Example 5 below (viscous liquid at 23 °C)
· Additive B-3: Aromatic compound synthesized in Synthesis Example 6 below (solid at 23 °C)
· Additive B-4: Aromatic compound synthesized in Synthesis Example 7 below (viscous liquid at 23 °C)
· Additive B-5: Aromatic compound synthesized in Synthesis Example 8 below (solid at 23 °C)
· Additive B-6: Aromatic compound synthesized in Synthesis Example 9 below (solid at 23 °C)
· Additive B-7: Aromatic compound synthesized in Synthesis Example 10 below (viscous liquid at 23 °C)
· Foam stabilizer: VORASURF SH-193 fluid (manufactured by Dow Toray Co., Ltd.)
· Urethanization catalyst: DM70 (manufactured by Tosoh Corporation, imidazole-based catalyst)
· Trimerization catalyst: TOYOCAT TRX (manufactured by Tosoh Corporation, quaternary ammonium salt)

### <Synthesis Example 1>

A 500 mL separable flask was charged with 300 mL of methanol that had been dehydrated in advance with molecular sieves. Then, the methanol was cooled in an ice bath while being stirred at 300 rpm, and 50 g of a polyisocyanate (Millionate MR-200, polymeric MDI manufactured by Tosoh Corporation, NCO content 31% by mass, binuclear compound content 41%) was added thereto. Then, the reaction liquid was stirred for 10 minutes while being cooled with ice, and further stirred at room temperature for 30 minutes. Then, the reaction liquid was sampled and FTIR was measured, and it was confirmed that the peak at approximately 2250 cm⁻¹ derived from the isocyanate groups of the polymeric MDI had completely disappeared. Then, after the methanol was distilled off under reduced pressure, the obtained pale yellow solid was ground in a mortar to form a powder, and further dried overnight in a vacuum dryer at 80 °C. This gave Additive A-3 in which the isocyanate groups of the polymeric MDI were capped with urethane bonds formed by the reaction with the hydroxyl groups of methanol.

### <Synthesis Example 2>

A 500 mL separable flask was charged with 242.6 g of Millionate MR-200. Then, while the polyisocyanate was stirred at 150 rpm, 57.4 g of ethanol that had been dehydrated in advance with molecular sieves was added in multiple portions while appropriately cooling so that the temperature of the reaction liquid did not exceed 70 °C. After the exothermic reaction subsided, the reaction liquid was stirred for a further 3 hours while the temperature was controlled at 70 °C to 80 °C, and then sampled and FTIR was measured, and it was confirmed that the peak at approximately 2250 cm⁻¹ had disappeared. This gave Additive A-4 in which the isocyanate groups of the polymeric MDI were capped with urethane bonds formed by the reaction with the hydroxyl groups of ethanol.

### <Synthesis Example 3>

Additive A-5 in which the isocyanate groups of the polymeric MDI were capped with urethane bonds formed by the reaction with the hydroxyl groups of 2-propanol was obtained in the same manner as in Synthesis Example 2, except that the charged amount of Millionate MR-200 was changed to 207.8 g and 92.2 g of 2-propanol was used instead of ethanol.

### <Synthesis Example 4>

In the same manner as in Synthesis Example 1, except that tolylene diisocyanate (manufactured by Tokyo Chemical Industry Co., Ltd., a mixture of approximately 80% by mass of 2,4-tolylene diisocyanate and approximately 20% by mass of 2,6-tolylene diisocyanate, hereinafter referred to as "TDI") was used instead of Millionate MR-200, and ethanol was used instead of methanol, Additive A-6 in which the isocyanate groups of TDI were capped with urethane bonds formed by the reaction with the hydroxyl groups of ethanol was obtained.

### <Synthesis Example 5>

Additive B-2 in which the isocyanate groups of phenyl isocyanate were capped with urethane bonds formed by the reaction with the hydroxyl groups of 2-ethylhexanol was obtained in the same manner as in Synthesis Example 2, except that 143.3 g of phenyl isocyanate (manufactured by Tokyo Chemical Industry Co., Ltd.) was used instead of Millionate MR-200, and 156.7 g of 2-ethylhexanol was used instead of ethanol.

### <Synthesis Example 6>

Additive B-3 in which the isocyanate groups of the polymeric MDI were capped with urethane bonds formed by the reaction with the hydroxyl groups of 1-butanol was obtained in the same manner as in Synthesis Example 2, except that the charged amount of Millionate MR-200 was changed to 194 g and 106 g of 1-butanol was used instead of ethanol.

### <Synthesis Example 7>

Additive B-4 in which the isocyanate groups of monomeric MDI were capped with urethane bonds formed by the reaction with the hydroxyl groups of 2-ethylhexanol was obtained in the same manner as in Synthesis Example 2, except that 147 g of Millionate MT (monomeric MDI manufactured by Tosoh Corporation) was used instead of Millionate MR-200, and 153 g of 2-ethylhexanol was used instead of ethanol.

### <Synthesis Example 8>

Additive B-5 in which the isocyanate groups of TDI were capped with urethane bonds formed by the reaction with the hydroxyl groups of 2-chloroethanol was obtained in the same manner as in Synthesis Example 2, except that 155.9 g of TDI was used instead of Millionate MR-200, and 144.1 g of 2-chloroethanol was used instead of ethanol.

### <Synthesis Example 9>

Additive B-6 in which the isocyanate groups of TDI were capped with urethane bonds formed by the reaction with the hydroxyl groups of 1-butanol was obtained in the same manner as in Synthesis Example 2, except that 162.1 g of TDI was used instead of Millionate MR-200, and 137.9 g of 1-butanol was used instead of ethanol.

### <Synthesis Example 10>

Additive B-7 in which the isocyanate groups of TDI were capped with urethane bonds formed by the reaction with the hydroxyl groups of 2-ethylhexanol was obtained in the same manner as in Synthesis Example 2, except that 120.2 g of TDI was used instead of Millionate MR-200, and 179.8 g of 2-ethylhexanol was used instead of ethanol.

### <Preparation Example 1>

Polyol a and Polyol b were added to a 300 mL separable flask, and then Additive A-1 was added, and the mixture was stirred at 300 rpm for 30 minutes while adjusting the temperature inside the system to 80 °C. This gave a mixed liquid in which Additive A-1 was dissolved in the polyol (a mixed liquid of Polyol a and Polyol b). Then, after the liquid temperature of the obtained mixed liquid was cooled to 30 °C or lower, a foam stabilizer, a urethanization catalyst, a trimerization catalyst, and water were added to the mixed liquid, and the mixture was stirred at 300 rpm for 5 minutes while maintaining the liquid temperature at 15 °C to 30 °C. This gave Polyol Composition (1). The blending amounts of each component are as shown in Table 1. Note that the unit of the blending amounts shown in Table 1 is parts by mass.

### <Preparation Example 2>

Polyol Composition (2) was obtained in the same manner as in Preparation Example 1, except that Additive A-2 was used instead of Additive A-1, and the blending amounts of each component were changed as shown in Table 1.

### <Preparation Example 3>

Polyol a, Polyol b, a foam stabilizer, a urethanization catalyst, a trimerization catalyst, and water were added to a 300 mL separable flask, and the mixture was stirred at 300 rpm for 5 minutes while maintaining the liquid temperature at 15 °C to 30 °C. This gave Polyol Composition (3). The blending amounts of each component are as shown in Table 1.

### <Preparation Example 4>

Polyol a, Polyol b, Additive B-1, a foam stabilizer, a urethanization catalyst, a trimerization catalyst, and water were added to a 300 mL separable flask, and the mixture was stirred at 300 rpm for 5 minutes while maintaining the liquid temperature at 15 °C to 30 °C. This gave Polyol Composition (4). The blending amounts of each component are as shown in Table 1.

### <Preparation Examples 5 to 13>

Polyol Compositions (5) to (14) were obtained in the same manner as in Preparation Example 1, except that Additives A-3 to A-6 or B-2 to B-7 were used instead of Additive A-1, and the blending amounts of each component were changed as shown in Table 1.

**[Table 1]**

| Polyol Composition | (1) | (2) | (3) | (4) | (5) | (6) | (7) | (8) | (9) | (10) | (11) | (12) | (13) | (14) |
|---|---|---|---|---|---|---|---|---|---|---|---|---|---|---|
| Polyol a | 60 | 60 | 60 | 60 | 60 | 60 | 60 | 60 | 60 | 60 | 60 | 60 | 60 | 60 |
| Polyol b | 40 | 40 | 40 | 40 | 40 | 40 | 40 | 40 | 40 | 40 | 40 | 40 | 40 | 40 |
| Additive A-1 | 16.2 | - | - | - | - | - | - | - | - | - | - | - | - | - |
| Additive A-2 | - | 16.2 | - | - | - | - | - | - | - | - | - | - | - | - |
| Additive B-1 | - | - | - | 16.2 | - | - | - | - | - | - | - | - | - | - |
| Additive A-3 | - | - | - | - | 16.2 | - | - | - | - | - | - | - | - | - |
| Additive A-4 | - | - | - | - | - | 16.2 | - | - | - | - | - | - | - | - |
| Additive A-5 | - | - | - | - | - | - | 16.2 | - | - | - | - | - | - | - |
| Additive A-6 | - | - | - | - | - | - | - | 16.2 | - | - | - | - | - | - |
| Additive B-2 | - | - | - | - | - | - | - | - | 16.2 | - | - | - | - | - |
| Additive B-3 | - | - | - | - | - | - | - | - | - | 16.2 | - | - | - | - |
| Additive B-4 | - | - | - | - | - | - | - | - | - | - | 16.2 | - | - | - |
| Additive B-5 | - | - | - | - | - | - | - | - | - | - | - | 16.2 | - | - |
| Additive B-6 | - | - | - | - | - | - | - | - | - | - | - | - | 16.2 | - |
| Additive B-7 | - | - | - | - | - | - | - | - | - | - | - | - | - | 16.2 |
| Foam stabilizer | 1.9 | 1.9 | 2.0 | 1.9 | 1.9 | 1.9 | 1.9 | 1.9 | 1.9 | 1.9 | 1.9 | 1.9 | 1.9 | 1.9 |
| Urethanization catalyst | 1.82 | 1.68 | 1.37 | 1.68 | 1.82 | 1.82 | 1.82 | 1.82 | 1.82 | 1.82 | 1.82 | 1.82 | 1.82 | 1.82 |
| Trimerization catalyst | 1.82 | 1.68 | 1.37 | 1.68 | 1.82 | 1.82 | 1.82 | 1.82 | 1.82 | 1.82 | 1.82 | 1.82 | 1.82 | 1.82 |
| Water | 1.17 | 1.17 | 1.08 | 1.17 | 1.17 | 1.17 | 1.17 | 1.17 | 1.17 | 1.17 | 1.17 | 1.17 | 1.17 | 1.17 |

### <Example 1>

First, an aluminum mold equipped with a lid (inner dimensions of mold: height 250 mm, width 250 mm, thickness 50 mm) was temperature-controlled in a 60 °C constant temperature bath. Then, the polyol composition (1) obtained in Preparation Example 1 and HFO-1233zd (Solstice LBA, manufactured by Honeywell) as a physical blowing agent were mixed at the mass ratio shown in Table 2. Then, the obtained mixed liquid was temperature-controlled to 20 °C and placed into a 500 mL polypropylene cup, and a polyisocyanate (Millionate MR-200, polymeric MDI manufactured by Tosoh Corporation, NCO content 31% by mass) separately temperature-controlled to 20 °C was added thereto and mixed for 3 seconds at 6000 rpm using a laboratory mixer. At this time, the amount of the polyisocyanate added was adjusted so that the isocyanate index was 200, and the content of Additive A-1 based on the total amount of the blended components was 5.0% by mass. Then, approximately 133 g (133 ± 2 g) of the obtained mixed liquid (polyurethane foam-forming composition) was placed into the above-described mold, and the mold was immediately covered with a lid and heated in a 60 °C constant temperature bath for 20 minutes to react, foam, and cure. This gave a rectangular parallelepiped-shaped polyurethane foam (rigid polyurethane foam). The obtained polyurethane foam was immediately removed from the mold after the reaction was completed, and used for measurement of density and core density, and for evaluation of thermal conductivity.

The mass and dimensions of the polyurethane foam immediately after demolding were measured, and the foam density of the polyurethane foam was calculated in accordance with JIS A9521. Then, immediately, all six skin layers were cut off to cut out a core panel from the center of the polyurethane foam, and the mass and dimensions of the core panel were measured to calculate the core density. The results are shown in Table 2. Note that the dimensions of the core panel were 200 mm × 200 mm × 14 mm.

### <Examples 2 to 6 and Comparative Examples 1 to 8>

Polyurethane foams of Examples 2 to 6 and Comparative Examples 1 to 8 were obtained in the same manner as in Example 1, except that Polyol Compositions (2) to (14) were used instead of Polyol Composition (1), and the blending ratios shown in Table 2 or Table 3 were used. Note that the content of each additive (A-2 to A-6 and B-1 to B-7) based on the total amount of the blended components in the polyurethane foam-forming compositions of Examples 2 to 6 and Comparative Examples 2 to 8 was 5.0% by mass in all cases.

### <Evaluation>

The time-dependent change in heat insulating performance was evaluated by measurement over time of the thermal conductivity of the polyurethane foams obtained in Examples 1 to 6 and Comparative Examples 1 to 8. Specifically, by the heat flow meter method shown in JIS A1412, using Auto-λ HC-074/314 manufactured by EKO INSTRUMENTS CO., LTD., at an average temperature of 23 °C, the thermal conductivity λ (initial value) of the above-described core panel immediately after cutting out, and the thermal conductivity λ of the above-described core panel after a storage test were measured. The storage test was performed by storing the core panel after the initial value measurement in a constant temperature and humidity room at 23 °C/50% R.H. for 28 days.

This test is an accelerated test based on the concept of the scaling factor shown in JIS A1486, and the 28-day aging of the above-described 14 mm-thick core panel corresponds to approximately 1 year of aging of a 50 mm-thick core panel. The results are shown in Tables 2 and 3. Note that Comparative Example 6 is denoted as "N/A" because evaluation was impossible due to foam shrinkage.

**[Table 2]**

| | | Example 1 | Example 2 | Comparative Example 1 | Comparative Example 2 | Example 3 | Example 4 | Example 5 |
|---|---|---|---|---|---|---|---|---|
| Formulation (parts by mass) | Polyol Composition (1) | 56.7 | - | - | - | - | - | - |
| | Polyol Composition (2) | - | 56.8 | - | - | - | - | - |
| | Polyol Composition (3) | - | - | 52.9 | - | - | - | - |
| | Polyol Composition (4) | - | - | - | 56.8 | - | - | - |
| | Polyol Composition (5) | - | - | - | - | 56.7 | - | - |
| | Polyol Composition (6) | - | - | - | - | - | 56.7 | - |
| | Polyol Composition (7) | - | - | - | - | - | - | 56.7 |
| | Physical blowing agent | 15.7 | 15.7 | 15.7 | 15.7 | 15.7 | 15.7 | 15.7 |
| | Polyisocyanate | 77.6 | 77.5 | 81.4 | 77.5 | 77.6 | 77.6 | 77.6 |
| Isocyanate index | | 200 | 200 | 200 | 200 | 200 | 200 | 200 |
| Content C_{A} (parts by mass) | | 6.1 | 6.1 | 0 | 0 | 6.1 | 6.1 | 6.1 |
| Foam density (kg/m³) | | 40.3 | 41.0 | 40.1 | 40.0 | 39.5 | 39.3 | 39.2 |
| Core density (kg/m³) | | 35.0 | 35.7 | 36.0 | 34.1 | 35.9 | 35.8 | 35.2 |
| Thermal conductivity λ (mW/m·K) | Initial value | 18.33 | 18.31 | 18.29 | 18.71 | 17.84 | 18.21 | 18.12 |
| | After storage test | 20.15 | 19.97 | 20.90 | 21.38 | 19.65 | 20.26 | 20.35 |
| | Change | 1.82 | 1.66 | 2.61 | 2.67 | 1.81 | 2.05 | 2.23 |

**[Table 3]**

| | | Example 6 | Comparative Example 3 | Comparative Example 4 | Comparative Example 5 | Comparative Example 6 | Comparative Example 7 | Comparativ e Example 8 |
|---|---|---|---|---|---|---|---|---|
| Formulation (parts by mass) | Polyol Composition (8) | 56.7 | - | - | - | - | - | - |
| | Polyol Composition (9) | - | 56.7 | - | - | - | - | - |
| | Polyol Composition (10) | - | - | 56.7 | - | - | - | - |
| | Polyol Composition (11) | - | - | - | 56.7 | - | - | - |
| | Polyol Composition (12) | - | - | - | - | 56.7 | - | - |
| | Polyol Composition (13) | - | - | - | - | - | 56.7 | - |
| | Polyol Composition (14) | - | - | - | - | - | - | 56.7 |
| | Physical blowing agent | 15.7 | 15.7 | 15.7 | 15.7 | 15.7 | 15.7 | 15.7 |
| | Polyisocyanate | 77.6 | 77.6 | 77.6 | 77.6 | 77.6 | 77.6 | 77.6 |
| Isocyanate index | | 200 | 200 | 200 | 200 | 200 | 200 | 200 |
| Content C_{A} (parts by mass) | | 6.1 | 0 | 0 | 0 | 0 | 0 | 0 |
| Foam density (kg/m³) | | 39.8 | 40.5 | 38.4 | 40.1 | N/A | 40.2 | 38.3 |
| Core density (kg/m³) | | 36.2 | 36.3 | 35.0 | 36.4 | | 36.3 | 35.0 |
| Thermal conductivity λ (mW/m·K) | Initial value | 18.06 | 18.44 | 18.08 | 18.24 | | 18.22 | 18.45 |
| | After storage test | 20.14 | 21.06 | 20.59 | 20.91 | | 20.76 | 21.15 |
| | Change | 2.08 | 2.62 | 2.51 | 2.67 | | 2.54 | 2.70 |

The content C_{A} in Tables 2 and 3 is the content of Additive A (a compound represented by formula (1) or formula (2)) in the polyurethane foam per 100 parts by mass of the polyurethane resin. Note that the amount of the polyurethane resin in the polyurethane foam was determined by subtracting "the mass of carbon dioxide generated during the reaction of water and the polyisocyanate" from the total blended mass of the polyol (Polyol a and Polyol b), the polyisocyanate, and water.

In Examples 1 to 6 in which Additive A was used, it was confirmed that the time-dependent increase in thermal conductivity of the polyurethane foam was suppressed.

## Claims

1. A polyurethane foam-forming composition comprising: a polyol, a polyisocyanate, and at least one aromatic compound selected from the group consisting of a compound represented by the following formula (1) and a compound represented by the following formula (2). 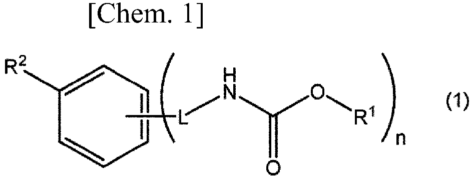 [In formula (1), R¹ represents an aliphatic hydrocarbon group having 1 to 3 carbon atoms, R² represents a hydrogen atom or a methyl group, L represents a single bond or a methylene group, and n represents 1 or 2. When a plurality of R¹ are present, they may be the same as or different from each other, and when a plurality of L are present, they may be the same as or different from each other.] 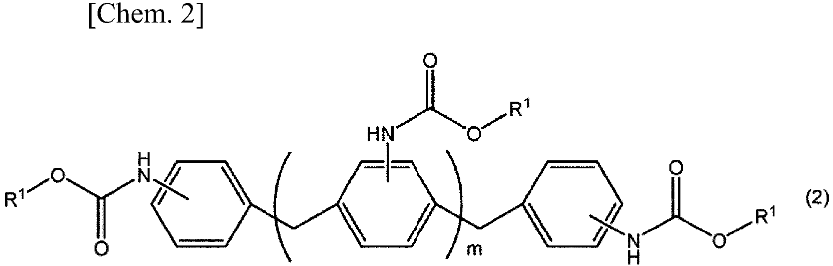 [In formula (2), R¹ has the same meaning as R¹ in the formula (1), and m represents 0 or an integer of 1 or more. A plurality of R¹ may be the same as or different from each other.]

2. The polyurethane foam-forming composition according to claim 1, comprising a reaction product of: at least one isocyanate selected from the group consisting of phenyl isocyanate, tolylene diisocyanate, diphenylmethane diisocyanate, and polymethylene polyphenyl polyisocyanate; and an aliphatic monoalcohol having 1 to 3 carbon atoms.

3. The polyurethane foam-forming composition according to claim 1, wherein the polyol comprises an aromatic polyester polyol.

4. The polyurethane foam-forming composition according to claim 1, further comprising at least one selected from the group consisting of a catalyst, a foam stabilizer, and a blowing agent.

5. An additive for polyurethane foam, comprising at least one aromatic compound selected from the group consisting of a compound represented by the following formula (1) and a compound represented by the following formula (2). 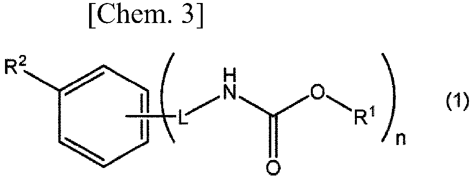 [In formula (1), R¹ represents an aliphatic hydrocarbon group having 1 to 3 carbon atoms, R² represents a hydrogen atom or a methyl group, L represents a single bond or a methylene group, and n represents 1 or 2. When a plurality of R¹ are present, they may be the same as or different from each other, and when a plurality of L are present, they may be the same as or different from each other.] 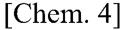 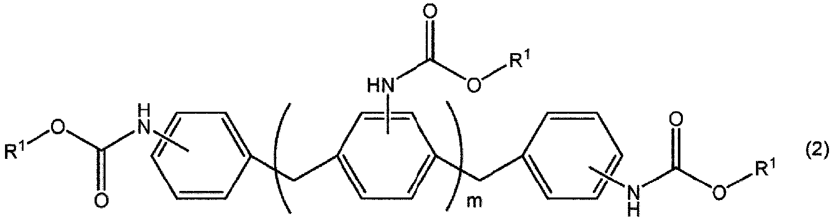 [In formula (2), R¹ has the same meaning as R¹ in the formula (1), and m represents 0 or an integer of 1 or more. A plurality of R¹ may be the same as or different from each other.]

6. The additive for polyurethane foam according to claim 5, comprising a reaction product of: at least one isocyanate selected from the group consisting of phenyl isocyanate, tolylene diisocyanate, diphenylmethane diisocyanate, and polymethylene polyphenyl polyisocyanate; and an aliphatic monoalcohol having 1 to 3 carbon atoms.

7. The additive for polyurethane foam according to claim 5 or 6, which is a thermal conductivity modifier.

8. A polyurethane foam formed from the polyurethane foam-forming composition according to any one of claims 1 to 4.
